# EUROPEAN PATENT SPECIFICATION

(11) **EP 3 066 732 B1**
(45) Date of publication and mention of the grant of the patent: **04.09.2019**
(21) Application number: 15725667.8
(22) Date of filing: 03.06.2015
(51) Int. Cl.: H02G 3/06

(54) **CABLE CLAMPING APPARATUS**
KABELKLEMMVORRICHTUNG
APPAREIL DE SERRAGE DE CÂBLE

(30) Priority: 30.06.2014 EP 14174989
(43) Date of publication of application: 14.09.2016
(73) Proprietor: CMP Products Limited, Northumberland NE23 1WH (GB)
(72) Inventor: SWAN, Martin, Cramlington Northumberland NE23 1EB (GB)
(74) Representative: Vinsome, Rex Martin
(86) International application number: PCT/EP2015/062449
(87) International publication number: WO 2016/000901

(56) References cited:
- WO-A1-01/14780
- WO-A1-94/27079
- DE-A1- 4 215 635
- GB-A- 2 488 999
- US-A- 5 998 737
- US-A1- 2013 203 291

## Description

The present invention relates to a clamping apparatus, and relates particularly, but not exclusively, to a cable clamping apparatus for incorporation in a cable gland.

Cable glands are used to mount cables to an enclosure and generally have a gland body having an external screw threaded part. The gland body is formed from two or more parts defining an aperture through which a cable passes, and one or more seals are located in the gland body for sealing against an external surface of the cable. Conductors forming part of an earthing layer of the cable are splayed outwards and clamped between a conical body and a sleeve of the cable gland to provide an earth connection between the cable gland and the cable. As screw threads on two of the gland body parts engage each other, axial movement of the two parts relative to each other compresses one or more of the seals axially, causing the seals to expand radially and be brought into sealing engagement with an external surface of the cable. One or more of the seals can also perform a clamping function to resist axial movement of the cable relative to the gland body, i.e. to provide pull-out resistance to the cable.

This arrangement suffers from the drawback that the resilient seals only provide a satisfactory clamping action over a relatively narrow range of cable diameters. In addition, the use of a cone and sleeve arrangement to clamp the conductive members of the earthing layer to form an earth connection between the cable gland and the cable increases the cost and complexity of the cable gland, and increases the time taken for and complexity of its assembly.

GB 2488999 discloses a known locking device having gripping portions which grip a cable as a result of rotation of first and second retaining members relative to each other. However, this arrangement suffers from the disadvantage that the gripping portions must be flexible, in order to be brought into engagement with a cable passing through the device. This limits the clamping force which can be applied by the apparatus without causing damage to the cable.
US 5998737 discloses a clamping apparatus according to the preamble of claim 1.

Preferred embodiments of the present invention seek to overcome one or more of the above disadvantages of the prior art.

According to the present invention, there is provided a clamping apparatus comprising:-
a body having a first aperture therethrough for receiving at least part of a cable;
a plurality of clamping members moveably mounted relative to said body; and
actuator means for causing said clamping members to move relative to said body;
characterised in that said clamping members are pivotably mounted relative to said body by means of a respective protrusion, at a respective end of each said clamping member, pivotably engaging a respective recess provided in said body, said actuator means is adapted to cause said clamping members to pivot relative to said body, such that at least a respective part of a plurality of said clamping members is brought into clamping engagement with at least part of a cable passing through said first aperture, and at least one said
clamping member includes a curved surface adapted to be brought into clamping engagement with the cable.

By providing a plurality of clamping members pivotably mounted relative to the body, and actuator means for causing the clamping members to move relative to the body such that at least part of a plurality of the clamping members is brought into clamping engagement with at least part of a cable passing through the first aperture, this provides the advantage of enabling the clamping members to be constructed from a relatively rigid material. This in turn provides the advantage that clamping action does not rely on the resilience of a material, which enables a reliable clamping action to be achieved over a wider range of cable diameters. This also provides the advantage of improving the clamping force and/or axial pull load resistance.

A plurality of said clamping members may each include at least one respective first cam surface for engaging at least one second cam surface on said body to cause movement of said clamping members relative to said body.

This provides the advantage of simple construction.

At least one said first cam surface may be provided on a respective protrusion or recess adapted to engage a respective recess or protrusion on said body.

This provides the advantage of enabling compact construction of the clamping apparatus by enabling the clamping members to avoid protruding into the aperture in the body when not in clamping engagement with a cable.

The body may comprise at least one first body member having said first aperture therethrough and the actuator means may comprise at least one second body member having a second aperture therethrough for receiving at least part of a cable and moveably mounted relative to at least one said first body member.

A plurality of said clamping members may be pivotably mounted relative to at least one said second body member.

This provides the advantage of simplifying construction of the clamping apparatus.

At least one said second body member may be rotatably mounted relative to at least one said first body member.

This provides the advantage of enabling easier operation of the clamping apparatus as part of a cable gland. For example, the clamping apparatus can be incorporated into a cable gland such that rotation of threaded parts of the cable gland relative to each other to assemble the cable gland actuates the clamping apparatus.

At least one said second body member may be of substantially identical construction to at least one said first body member.

This provides the advantage of reducing the complexity and cost of manufacture of the apparatus.

The apparatus may further comprise locking means for maintaining clamping engagement of a plurality of said clamping members with said cable.

The locking means may comprise first engaging means on at least one said first body member and second engaging means on at least one said second body member, wherein said first and second engaging means are adapted to be brought into frictional engagement with each other as a result of actuation of said actuator means.

This provides the advantage of maintaining clamping engagement of a plurality of said clamping members with said cable over a wider range of cable diameters, thereby improving fitting of the apparatus to the cable.

At least one said first body member may be adapted to move axially relative to at least one said second body member to bring said first and second engaging means into frictional engagement with each other.

This provides the advantage of maintaining clamping engagement of a plurality of said clamping members with said cable over a wider range of cable diameters.

A plurality of said clamping members may be of substantially identical construction to each other.

This provides the advantage of further reducing complexity and cost of the apparatus.

At least one said curved surface may have a plurality of surface portions having different curvatures and adapted to engage respective surfaces of cables of different diameters.

This provides the advantage of enabling the clamping apparatus to effectively grip cables of a wide variety of diameters while minimising the risk of damage to the cables.

At least one said clamping member may comprise at least one protrusion on a surface thereof adapted to be brought into clamping engagement with the cable.

This provides the advantage of improving the clamping force and/or axial pull load resistance.

At least one said protrusion may be adapted to penetrate at least one layer of the cable.

This provides the advantage of improving reliability of earthing electrical connection between conductive members of the cable and a cable gland incorporating the apparatus.

According to another aspect of the present invention, there is provided a cable gland comprising:-
a gland body having a third aperture therethrough for receiving at least part of a cable;
at least one seal for sealing engagement with at least part of a cable extending through said third aperture; and at least one clamping apparatus as defined above.

The cable gland may further comprise at least one first gland body member and at least one second gland body member, wherein at least one said clamping apparatus is actuated by rotation of at least one said first gland body member relative to at least one said second gland body member.

This provides the advantage of simplifying operation of the cable gland.

Preferred embodiments of the invention will now be described, by way of example only and not in any limitative sense, with reference to the accompanying drawings, in which:-
Figure 1 is an exploded perspective view of a first embodiment of a cable gland of the present invention;
Figure 2 is a partially cut-away perspective view of the cable gland of Figure 1 in an assembled condition;
Figure 3 is a schematic perspective view of first embodiment of a clamping apparatus of the cable gland of Figure 1 embodying the present invention and with clamping members thereof in an unclamped position;
Figure 4 shows a perspective view of the clamping members of the clamping apparatus of Figure 3;
Figure 5 shows the clamping apparatus of Figure 3 with the clamping members in a clamped position;
Figure 6 is a view corresponding to Figure 5 with the clamping apparatus mounted to a cable;
Figure 7 is a perspective view of a cable prior to mounting the cable gland of Figure 1 thereto;
Figure 8 is a perspective view of the cable of Figure 7 with a cone and sleeve assembly of the cable gland of Figure 1 in an unassembled condition;
Figure 9 is a view corresponding to Figure 8 with the cone and sleeve assembly in an assembled condition;
Figure 10 is a perspective view of a second embodiment of a clamping apparatus of the present invention;
Figure 11 is a perspective view of a cable prior to mounting of the clamping apparatus of Figures 4 to 6 thereto;
Figure 12 is a perspective view of the clamping apparatus of Figures 4 to 6 mounted to the cable of Figure 11;
Figure 13 is a perspective view of a cable prior to mounting of the clamping apparatus of Figure 10 thereto;
Figure 14 is a partially cut-away perspective view of a second embodiment of a cable gland of the present invention;
Figure 15 is a partially cut-away perspective view of a cable gland incorporating the clamping apparatus of Figure 10;
Figure 16 is a perspective view of a third embodiment of a clamping apparatus of the present invention;
Figure 17 is a cross sectional view of the apparatus of Figure 16 in an unclamped position;
Figure 17A is an enlarged view of part of the apparatus of Figure 17;
Figure 18 is a cross sectional view of the apparatus of Figure 16 in a clamped position; and
Figure 18A is an enlarged view of part of the apparatus of Figure 18.

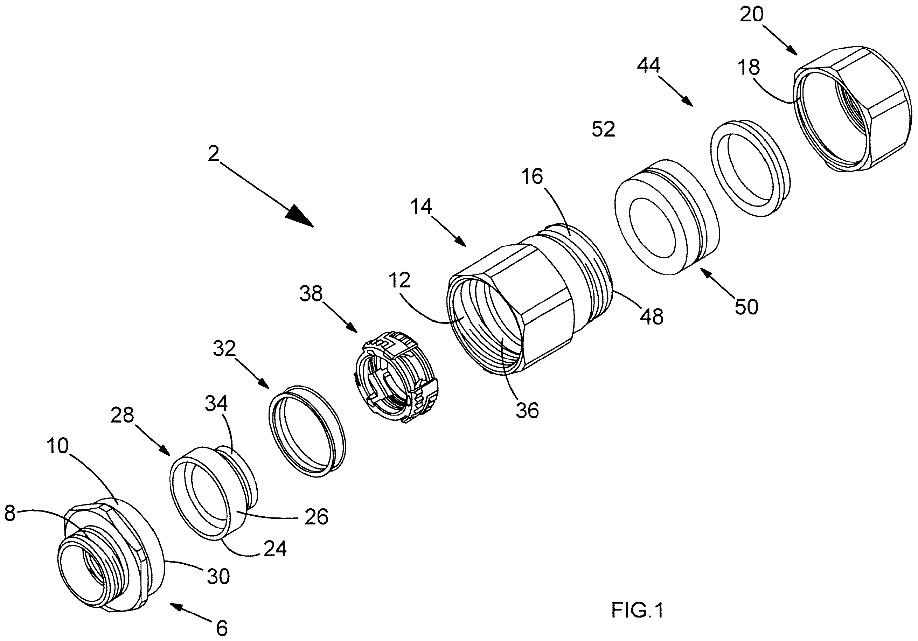

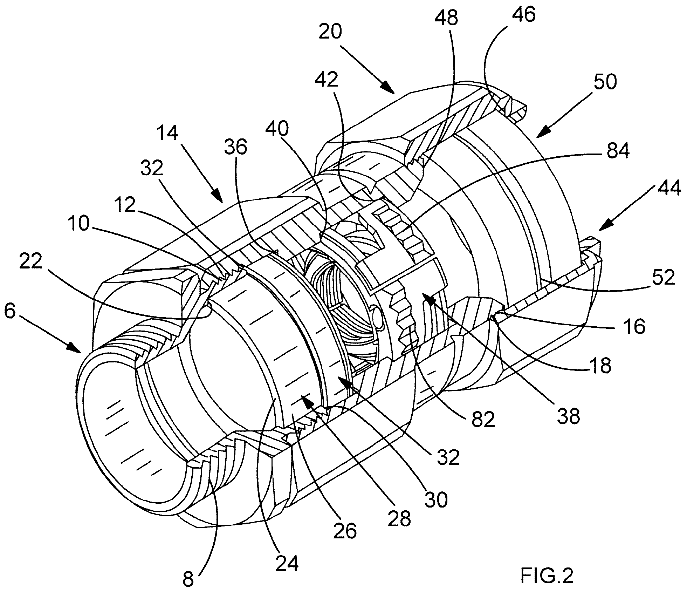

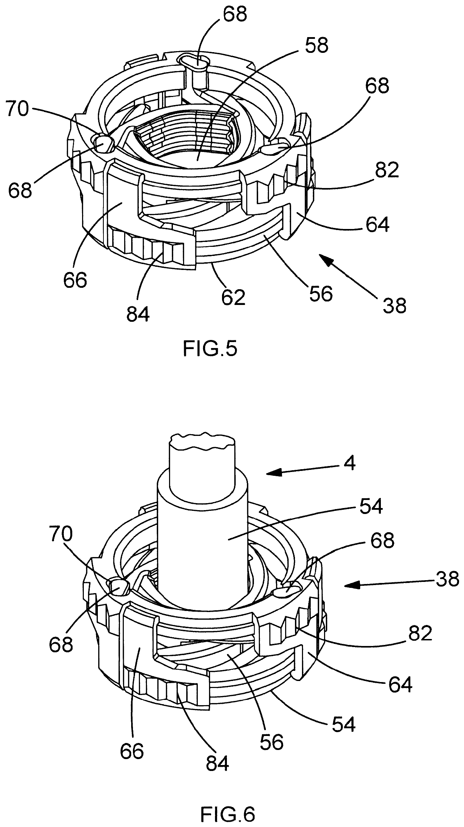

Referring to Figures 1 and 2, a cable gland 2 of a first embodiment of the present invention for mounting a cable 4 (Figures 6 to 9) to an enclosure (not shown) has a first gland body member 6 having a first external screw threaded portion 8 for engagement with a corresponding thread on the enclosure and a second external screw threaded portion 10 for engaging a first internal screw threaded portion 12 of a second gland body member 14. The second gland body member 14 has a third external screw threaded portion 16 for engagement with a second internal screw threaded portion 18 on a third gland body member 20. The first 6, second 14 and third 20 gland body members are mounted together to form a body of the cable gland 2.

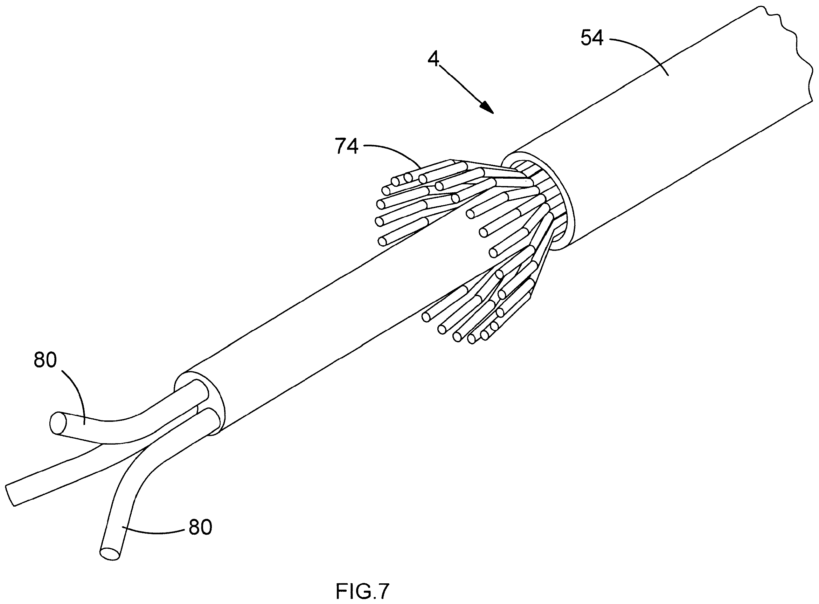

The first gland body member 6 has a first radial surface 22 for abutment with a first end 24 of a wider part 26 of a generally conical member 28 forming part of a cone and sleeve assembly. A second radial surface 30 of the first gland body member 6 abuts a first end of a sleeve 32 forming part of the cone and sleeve assembly and inside which a narrower part 34 (Figure 2) of the conical member 28 fits. A second end of the sleeve 32 abuts a third radial surface 36 on the second gland body member 14, such that engagement of the first 6 and second 14 gland body members to move the first 22 and second 36 radial surfaces towards each other holds the conical member 28 and sleeve 32 in position to clamp electrically conductive members 74 (Figures 7 to 9) of an earthing layer of the cable 4 between the conical member 28 and the sleeve 32 to form an electrical connection between the cable gland 2 and the cable 4.

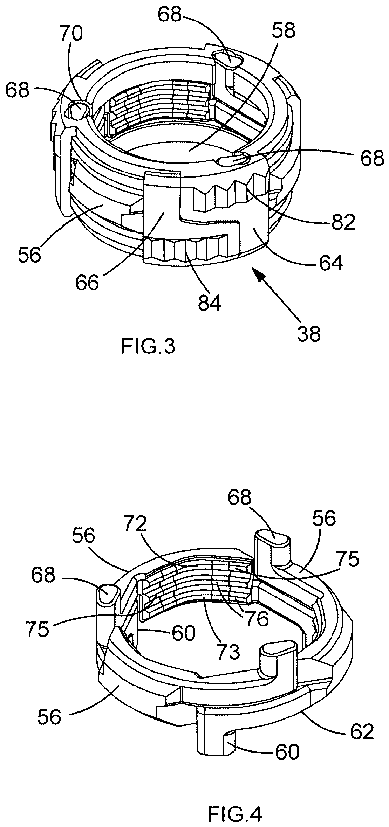

A clamping apparatus 38 of a first embodiment of the present invention (the operation of which will be described in greater detail below with reference to Figures 3 to 6) is located between a fourth radial surface 40 and a fifth radial surface 42 on the second gland body member 14.The third gland body member 20 contains a ferrule 44 which abuts a sixth radial surface 46 on the third gland body member 20 and a seventh radial surface 48 on the second gland body member 14 abuts an end surface of a resilient seal 50 having an external circumferential groove (52) such that threaded engagement of the second 14 and third 20 gland body members to cause the sixth 46 and seventh 48 radial surfaces to move towards each other compresses the seal 50. The circumferential groove 52 causes the seal 50 to flex radially inwards into sealing engagement with a sheath 54 (Figures 6 to 9) of the cable 4.

Referring to Figures 3 to 6, the clamping apparatus 38 and has a plurality of (in the embodiment shown, three) clamping members 56 (Figure 4) arranged to define an aperture 58 for receiving the cable 4. Each of the clamping members 56 has a first protrusion 60 at a first end 62 thereof for engaging a body of the clamping apparatus 38 in the form of a first body member 64 (Figure 5) such that rotation of the clamping members 56 relative to the first body member 64 causes the first protrusions 60 to engage respective cam surfaces (not shown) on the first body member 64 to cause the clamping members 56 to pivot relative to actuator means in the form of a second body member 66 such that the first ends 62 of the clamping members 56 pivot inwards to reduce the size of the aperture 58. The first 64 and second 66 body members define respective first and second apertures therethrough for receiving the cable 4.

Each of the clamping members 56 has a second protrusion 68 at a second end thereof for pivotably engaging respective recesses 70 in second body member 66. In this way, inward or outward pivoting of the clamping members 56 is achieved by rotation of the first body member 64 relative to the second body member 66. Each of the clamping members 56 has a curved clamping surface 72 for engaging conducting sheath 74 (Figure 7) of the cable 4 to prevent longitudinal movement of the cable 4 relative to the second gland body member 14, while providing an adequate clamping force over a wide range of cable diameters. Each clamping surface 72 has a first surface portion 73 adapted to engage an external surface of a cable of a first diameter and a pair of second surface portions 75 adapted to engage an external surface of a cable of a second diameter, larger than the first diameter. This enables the clamping apparatus 30 to effectively grip cables of a wide variety of diameters while minimising the risk of damage to the cables. The curved clamping surfaces 72 are also provided with protrusions in the form of ribs 76 to improve the clamping force and pull load resistance. First teeth 82 provided on first body member 64 engage corresponding recesses (not shown) on the internal surface of the second gland body member 14, and second teeth 84 provided on the second body member 66 engage corresponding recesses (not shown) on the internal surface of the third gland body member 20. In this way, rotation of the second 14 and third 20 gland body members relative to each other causes rotation of the first 64 and second 66 body members relative to each other to actuate the clamping apparatus 38 to move the clamping members 56 from an unclamped position to a clamped position.

The operation of the cable gland 2 will now be described.

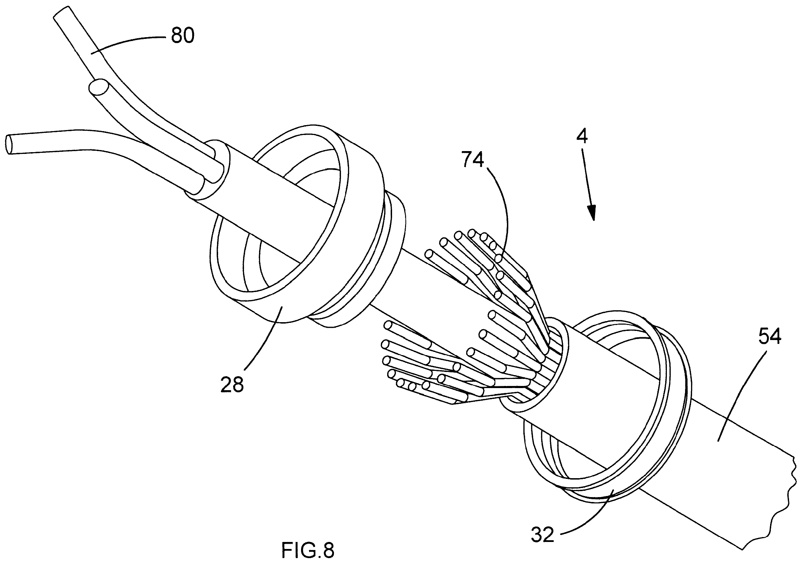

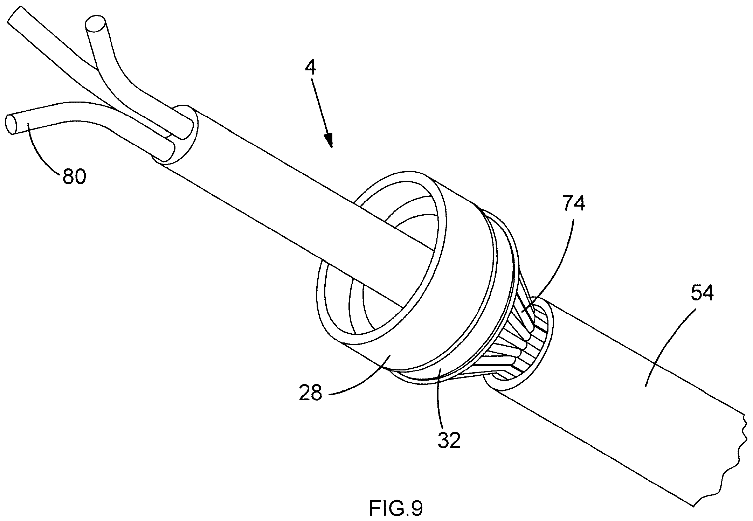

The cable 4 is initially prepared as shown in Figures 7 to 9 by removal of part of the sheath 54 to expose the conductive members 74 and individual conductors 80, and the conductive members 74 are splayed outwards as shown in Figure 7. The splayed conductive members 74 are then located between the conical member 28 and sleeve 32 as shown in Figure 8, and the conical member 28 and sleeve 32 are brought into engagement with each other as shown in Figure 9 to establish an electrical connection between the conductive members 74 and the conical member 28 and/or sleeve 32. The first 6 gland body member is then brought into threaded engagement with the second gland body member 14. At this time, the second 14 and third 20 gland body members are in loosely threaded engagement with each other so that the seal 50 is uncompressed or is only lightly compressed, and the clamping apparatus 38 is in its unclamped position as shown in Figure 3.

The second 14 and third 20 gland body members are then brought into tighter threaded engagement with each other to cause the first 64 and second 66 body members of the clamping apparatus 38 to be rotated relative to each other to bring the curved clamping surfaces 72 of the clamping members 56 into engagement with the external surface of the sheath 54 of the cable 4, as shown in Figures 5 and 6 to firmly clamp the cable 4 in position. Tighter engagement of the second 14 and third 20 gland body members also causes the seal 50 to be compressed and urged radially inwards into sealing engagement with the sheath 54 of the cable 4.

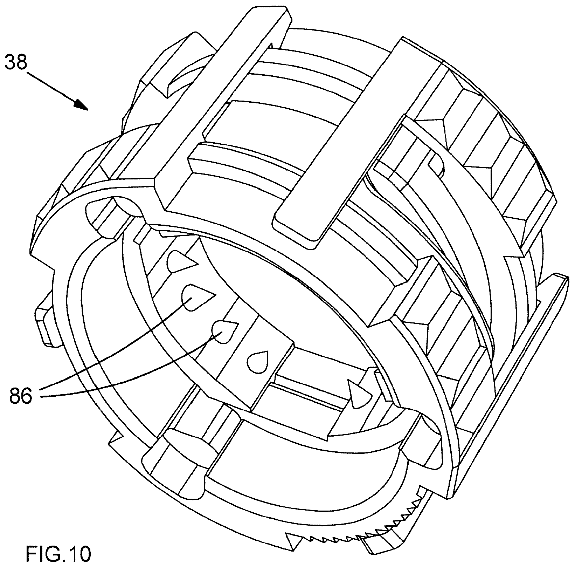

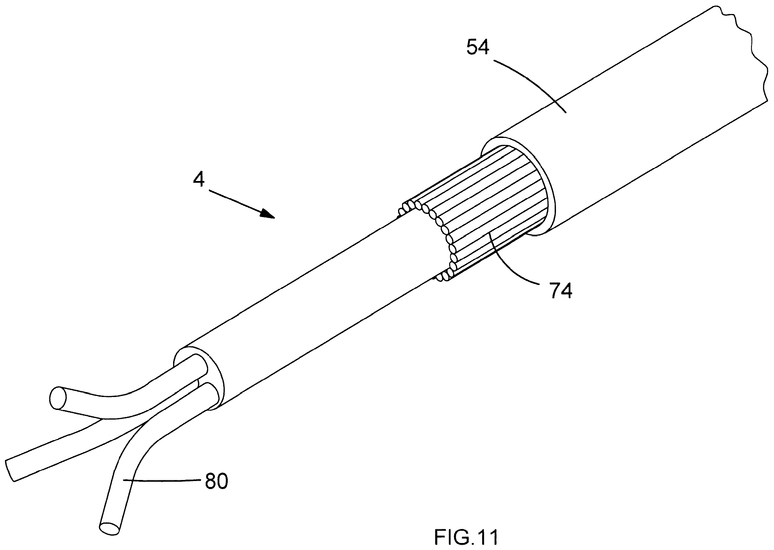

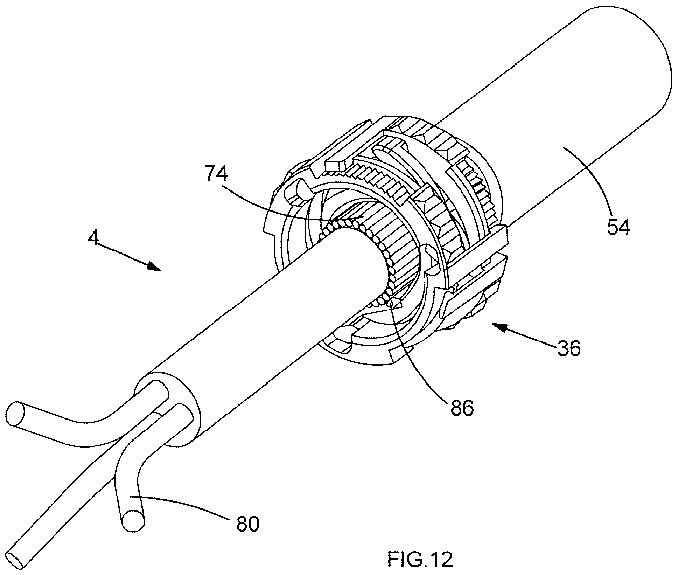

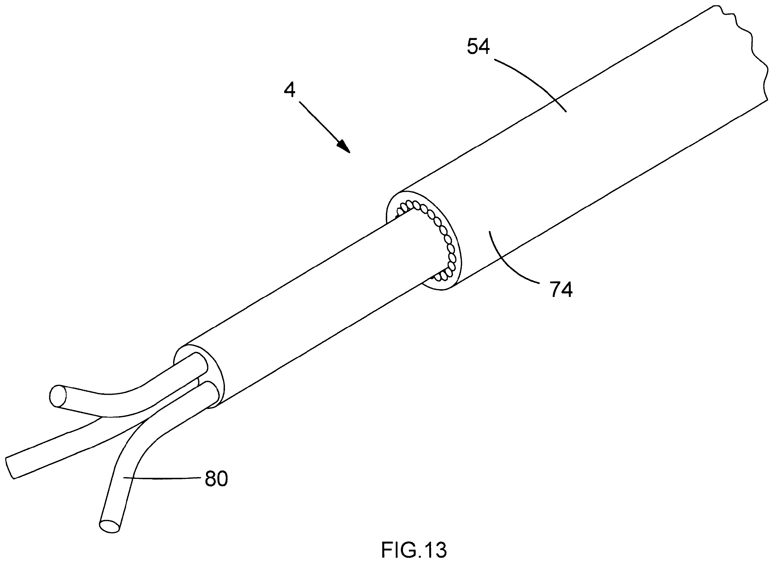

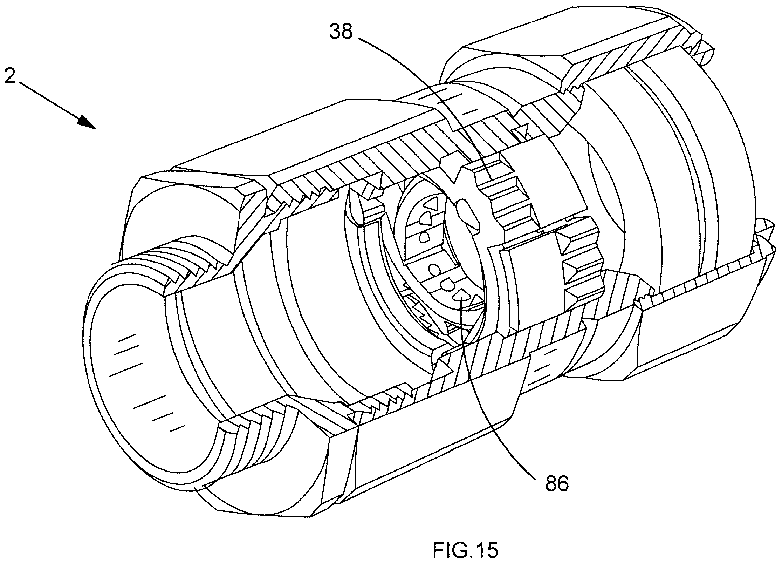

A clamping apparatus 38 of a second embodiment of the present invention is shown in Figure 10. In the clamping apparatus 38 of Figure 10, the ribs 76 of the embodiment of Figures 3 to 6 are replaced by electrically conductive spikes 86 which penetrate the sheath 54 of the cable 4 as the clamping apparatus 38 is brought into its clamping condition, so that an electrical connection is formed between the electrically conductive members 74 of the earthing layer of the cable 4 and the electrically conductive spikes 86, without the necessity of removing the sheath 54 of the cable 4 to expose the electrically conductive members 74, as is shown in Figure 13. Alternatively, or in addition, the clamping apparatus 38 can be provided with ribs 76 as shown in Figure 4 for forming an electrical connection with conductive members 74, as shown in Figures 11 and 12. In this way, the clamping apparatus 38 provides an earthing connection between the cable gland 2 and the cable 4 and pullout resistance at the same time, as a result of which the conical member 28 and sleeve 32 of the embodiment of Figures 1 to 9 are no longer necessary. This simplifies the construction of the cable gland 2 embodying the arrangement of Figure 10, but also simplifies the assembly of the cable gland 2 to the cable 4, since the conductive members 74 do not need to be splayed outwards, and the cable gland 2 can be directly mounted to the cable 4 as shown in the arrangement of Figure 12. A cable gland 2 incorporating the clamping apparatus 38 of Figure 10 is shown in Figure 15.

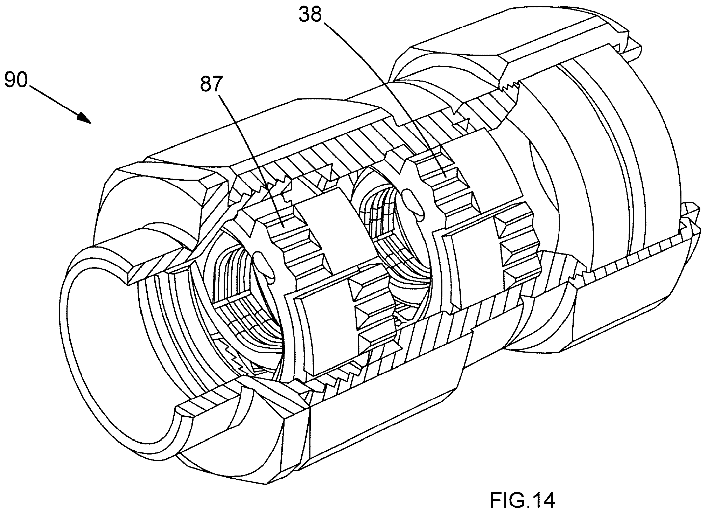

A second embodiment of a cable gland 90 of the present invention is shown in Figure 14. The cable gland 90 includes a first clamping apparatus 38 as shown in Figures 4 to 6 for clamping the external surface of a cable 4 and a second clamping apparatus 87 as shown in Figures 4 to 6 or Figure 10 for establishing an electrical connection with the conductive members 74 of the cable 4. In this case, the conical member 28 and sleeve 32 of the embodiment of Figure 1 are no longer necessary.

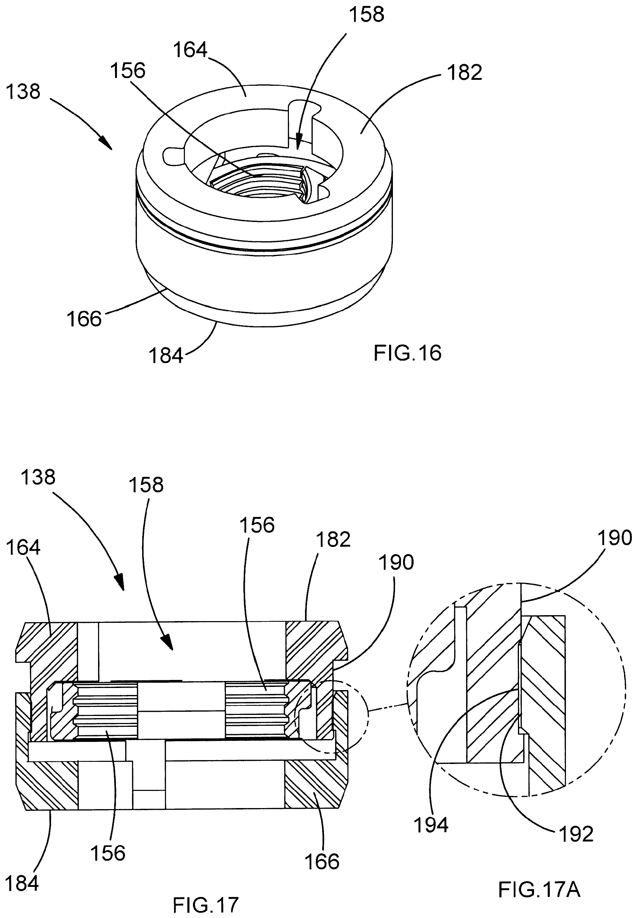

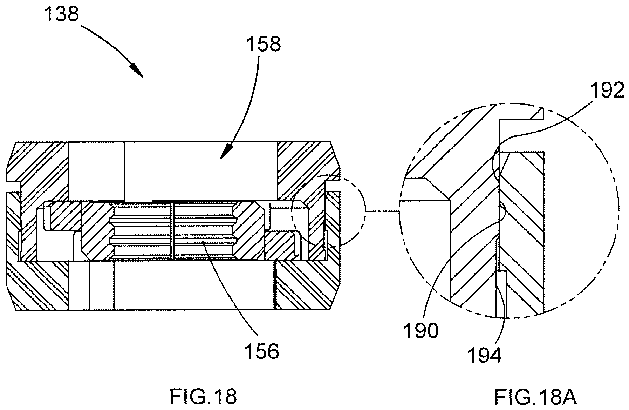

A clamping apparatus 138 of a third embodiment of the present invention is shown in Figures 16 to 18, in which parts common to the embodiment of Figures 3 to 6 are denoted by like reference numerals but increased by 100. The clamping apparatus 138 has first 164 and second 166 body members having respective end faces 182, 184 having teeth (not shown) for engaging the second 14 and third 20 gland body members respectively (Figures 1 and 2) to enable the first 164 and second 166 body members to rotate relative to each other to enable pivoting of clamping members 156 relative to the first 164 and second 166 body members in a manner similar to the embodiment of Figures 3 to 6, between an unclamped position (Figure 17) in which a cable (not shown) can be inserted into an aperture 158 defined by the clamping members 156, and a clamped position (Figure 18) in which the clamping members 156 engage a cable inserted into the aperture 158.

The first 164 and second 166 body members are axially moveable relative to each other and threaded engagement of the second 14 and third 20 gland body members urges the first 164 and second 166 body members axially towards each other, from the position shown in Figure 17 to that shown in Figure 18. The clamping apparatus 138 includes locking means including first engaging means in the form of a first friction surface 190 on the first body member 164 and second engaging means in the form of a second friction surface 192 on the second body member 166. The first friction surface 190 is axially spaced from a narrower portion 194 provided on the first body member 164 and having a smaller diameter than the first friction surface 190. The first body member 164 is moveable axially relative to the second body member 166 between the position shown in Figure 17A, in which the second friction surface 192 is arranged adjacent the narrower portion 194 and does not engage the first friction surface 190, allowing the first body member 164 to rotate freely relative to the second body member 166, and the position shown in Figure 18A, in which the second friction surface 192 frictionally engages the first friction surface to prevent rotation of the first body member 164 relative to the second body member 166. This in turn prevents disengagement of the clamping members 156 from the cable.

It will be appreciated by persons skilled in the art that the above embodiment has been described by way of example only and not in any limitative sense, and that various alterations and modifications are possible without departure from the scope of the invention as defined by the appended claims.

## Claims

1. A clamping apparatus (38) comprising:-
a body (64) having a first aperture therethrough for receiving at least part of a cable;
a plurality of clamping members (56) moveably mounted relative to said body; and
actuator means (66) for causing said clamping members to move relative to said body;
**characterised in that** said clamping members are pivotably mounted relative to said body by means of a respective protrusion (68), at a respective end of each said clamping member, pivotably engaging a respective recess (70) provided in said body, said actuator means is adapted to cause said clamping members to pivot relative to said body, such that at least a respective part (62) of a plurality of said clamping members is brought into clamping engagement with at least part of a cable passing through said first aperture, and at least one said clamping member includes a curved surface (72) adapted to be brought into clamping engagement with the cable.

2. An apparatus according to claim 1, wherein a plurality
of said clamping members each include at least one respective first cam surface for engaging at least one second cam surface on said body to cause movement of said clamping members relative to said body.

3. An apparatus according to claim 2, wherein at least one said first cam surface is provided on a respective protrusion or recess adapted to engage a respective recess or protrusion on said body.

4. An apparatus according to any one of the preceding claim, wherein the body comprises at least one first body member (64) having said first aperture therethrough and the actuator means comprises at least one second body member (66) having a second aperture therethrough for receiving at least part of a cable and moveably mounted relative to at least one said first body member.

5. An apparatus according to claim 4, wherein a plurality
of said clamping members are pivotably mounted relative to at least one said second body member.

6. An apparatus according to claim 4 or 5, wherein at least one said second body member is rotatably mounted relative to at least one said first body member.

7. An apparatus according to any one of claims 4 to 6, wherein at least one said second body member is of substantially identical construction to at least one said first body member.

8. An apparatus according to any one of the preceding claims, further comprising locking means (190, 192) for maintaining clamping engagement of a plurality of said clamping members with said cable.

9. An apparatus according to any one of claims 4 to 7 and claim 8, wherein said locking means comprises first engaging means (190) on at least one said first body member and second engaging means (192) on at least one said second body member, wherein said first and second engaging means are adapted to be brought into frictional engagement with each other as a result of actuation of said actuator means.

10. An apparatus according to claim 9, wherein at least one said first body member is adapted to move axially relative to at least one said second body member to bring said first and second engaging means into frictional engagement with each other.

11. An apparatus according to any one of the preceding claims, including one of the following features:
(i) wherein a plurality of said clamping members are of substantially identical construction to each other;
(ii) wherein at least one said clamping member comprises at least one protrusion (76, 86) on a surface thereof adapted to be brought into clamping engagement with the cable; or
(iii) wherein the apparatus is adapted to make electrical contact with at least one electrically conductive member of the cable.

12. An apparatus according to claim 11, wherein at least one said curved surface has a plurality of surface portions (73, 75) having different curvatures and adapted to engage respective surfaces of cables of different diameters.

13. An apparatus according to claim 11, wherein at least one said protrusion (86) is adapted to penetrate at least one layer of the cable.

14. A cable gland comprising:-
a gland body having a third aperture therethrough for receiving at least part of a cable;
at least one seal (50) for sealing engagement with at least part of a cable extending through said third aperture; and
at least one clamping apparatus according to any one of the preceding claims.

15. A cable gland according to claim 14, further comprising at least one first gland body member (6) and at least one second gland body member (14), wherein at least one said clamping apparatus is actuated by rotation of at least one said first gland body member relative to at least one said second gland body member.

## Patentansprüche

1. Eine Klemmvorrichtung (38) umfassend:-
einen Körper (64), der eine durchgehende erste Öffnung zur Aufnahme mindestens eines Teils eines Kabels hat;
eine Mehrzahl von Klemmelementen (56), die beweglich relativ zu diesem Körper angebracht sind; und
Antriebsmittel (66), um zu bewirken, dass besagte Klemmelemente sich relativ zu dem besagten Körper bewegen; **dadurch gekennzeichnet, dass** besagte Klemmelemente drehbar relativ zu dem besagten Körper mittels eines entsprechenden Vorsprungs (68) angebracht sind, an einem entsprechenden Ende von jedem besagten Klemmelement, das drehbar in eine entsprechende Ausnehmung (70) eingreift, die in besagtem Körper vorgesehen ist, besagtes Antriebsmittel dazu eingerichtet ist, besagte Klemmelemente dazu zu veranlassen, sich relativ zu dem besagten Körper zu drehen, so dass mindestens ein entsprechender Teil (62) von einer Mehrzahl von besagten Klemmelementen in klemmenden Eingriff mit mindestens einem Teil eines Kabels gebracht wird, das durch die besagte erste Öffnung verläuft, und mindestens ein besagtes Klemmelement eine gekrümmte Oberfläche (72) umfasst, die dazu eingerichtet ist, in klemmenden Eingriff mit dem Kabel gebracht zu werden.

2. Eine Vorrichtung nach Anspruch 1, wobei eine Mehrzahl von besagten Klemmelementen jeweils mindestens eine entsprechende erste Nockenoberfläche umfasst um in mindestens eine zweite Nockenoberfläche auf besagtem Körper einzugreifen, um die Bewegung von besagten Klemmelementen relativ zu besagtem Körper zu bewirken.

3. Eine Vorrichtung nach Anspruch 2, wobei mindestens eine besagte erste Nockenoberfläche an einem entsprechenden Vorsprung oder einer entsprechenden Ausnehmung vorgesehen ist, die dazu eingerichtet ist, in eine entsprechende Ausnehmung oder einen entsprechenden Vorsprung auf dem besagten Körper einzugreifen.

4. Eine Vorrichtung nach einem der vorstehenden Ansprüche, wobei der Körper mindestens ein erstes Körperelement (64) umfasst, welches die besagte durchgehende erste Öffnung hat, und das Antriebsmittel mindestens ein zweites Körperelement (66) umfasst, welches eine durchgehende zweite Öffnung zur Aufnahme mindestens eines Teils eines Kabels hat, und das beweglich relativ zu mindestens einem besagten ersten Körperelement angebracht ist.

5. Eine Vorrichtung nach Anspruch 4, wobei eine Mehrzahl von besagten Klemmelementen drehbar relativ zu mindestens einem besagten zweiten Körperelement angebracht ist.

6. Eine Vorrichtung nach Anspruch 4 oder 5, wobei mindestens ein besagtes zweites Körperelement drehbar relativ zu mindestens einem besagten ersten Körperelement angebracht ist.

7. Eine Vorrichtung nach einem der Ansprüche 4 bis 6, wobei mindestens ein besagtes zweites Körperelement von im Wesentlichen identischer Konstruktion ist wie mindestens ein besagtes erstes Körperelement.

8. Eine Vorrichtung nach einem der vorstehenden Ansprüche, ferner umfassend Verriegelungsmittel (190, 192) zum Erhalten des klemmenden Eingriffs von einer Mehrzahl von besagten Klemmelementen mit dem besagten Kabel.

9. Eine Vorrichtung nach einem der Ansprüche 4 bis 7 und Anspruch 8, wobei besagte Verriegelungsmittel erste Eingriffsmittel (190) auf mindestens einem besagten ersten Körperelement und zweite Eingriffsmittel (192) auf mindestens einem besagten zweiten Körperelement umfassen, wobei besagte erste und zweite Eingriffsmittel dazu eingerichtet sind, in reibenden Eingriff miteinander gebracht zu werden als Ergebnis einer Betätigung von besagtem Antriebsmittel.

10. Eine Vorrichtung nach Anspruch 9, wobei mindestens ein besagtes erstes Körperelement dazu eingerichtet ist, sich axial relativ zu mindestens einem besagten zweiten Körperelement zu bewegen, um besagte erste und zweite Eingriffsmittel in reibenden Eingriff miteinander zu bringen.

11. Eine Vorrichtung nach einem der vorstehenden Ansprüche, aufweisend eines der folgenden Merkmale:
(i) wobei eine Mehrzahl von besagten Klemmelementen von im Wesentlichen identischer Konstruktion sind;
(ii) wobei mindestens ein besagtes Klemmelement mindestens einen Vorsprung (76, 86) auf einer Oberfläche davon aufweist, der dazu eingerichtet ist, in klemmenden Eingriff mit dem Kabel gebracht zu werden; oder
(iii) wobei die Vorrichtung dazu eingerichtet ist, elektrischen Kontakt mit mindestens einem elektrisch leitfähigen Element des Kabels herzustellen.

12. Eine Vorrichtung nach Anspruch 11, wobei mindestens eine besagte gekrümmte Oberfläche eine Mehrzahl von Oberflächenbereichen (73, 75) aufweist, die verschiedene Krümmungen aufweisen, und dazu eingerichtet sind, in entsprechende Oberflächen von Kabeln mit verschiedenen Durchmessern einzugreifen.

13. Eine Vorrichtung nach Anspruch 11, wobei mindestens ein besagter Vorsprung (86) dazu eingerichtet ist, mindestens eine Schicht des Kabels zu durchdringen.

14. Eine Kabelverschraubung, umfassend:-
einen Verschraubungskörper, der eine durchgehende dritte Öffnung zur Aufnahme mindestens eines Teils eines Kabels hat;
mindestens eine Dichtung (50) zum dichtenden Eingriff mit mindestens einem Teil eines Kabel, das durch die besagte dritte Öffnung verläuft; und
mindestens eine Klemmvorrichtung nach einem der vorstehenden Ansprüche.

15. Eine Kabelverschraubung nach Anspruch 14, ferner umfassend mindestens ein erstes Verschraubungskörperelement (6) und mindestens ein zweites Verschraubungskörperelement (14), wobei mindestens eine besagte Klemmvorrichtung durch Drehung von mindestens einem besagten ersten Verschraubungskörperelement relativ zu mindestens einem besagten zweiten Verschraubungskörperelement betätigt wird.

## Revendications

1. Appareil de serrage (38) comprenant :
un corps (64) ayant une première ouverture à travers celui-ci pour recevoir au moins une partie d'un câble ;
une pluralité d'éléments de serrage (56) montés de manière mobile par rapport audit corps ; et
un moyen d'actionnement (66) pour amener lesdits éléments de serrage à se déplacer par rapport audit corps ;
**caractérisé en ce que** lesdits éléments de serrage sont montés en pivotement par rapport audit corps au moyen d'une saillie respective (68), au niveau d'une extrémité respective de chacun desdits éléments de serrage, s'engageant en pivotement avec un évidement respectif (70) prévu dans ledit corps, ledit moyen d'actionnement est adapté pour amener lesdits éléments de serrage à pivoter par rapport audit corps, de sorte qu'au moins une partie respective (62) d'une pluralité desdits éléments de serrage soit amenée en engagement de serrage avec au moins une partie d'un câble passant à travers ladite première ouverture, et au moins l'un desdits éléments de serrage comporte une surface incurvée (72) adaptée pour être amenée en engagement de serrage avec le câble.

2. Appareil selon la revendication 1, dans lequel une pluralité desdits éléments de serrage comportent chacun au moins une première surface de came respective pour s'engager avec au moins une deuxième surface de came sur ledit corps pour provoquer le déplacement desdits éléments de serrage par rapport audit corps.

3. Appareil selon la revendication 2, dans lequel au moins l'une desdites premières surfaces de came est prévue sur une saillie respective ou un évidement respectif adapté(e) pour s'engager avec un évidement respectif ou une saillie respective sur ledit corps.

4. Appareil selon l'une quelconque des revendications précédentes, dans lequel le corps comprend au moins un premier élément de corps (64) ayant ladite première ouverture à travers celui-ci et le moyen d'actionnement comprend au moins un deuxième élément de corps (66) ayant une deuxième ouverture à travers celui-ci pour recevoir au moins une partie d'un câble et monté de manière mobile par rapport à au moins l'un desdits premiers éléments de corps.

5. Appareil selon la revendication 4, dans lequel une pluralité desdits éléments de serrage sont montés en pivotement par rapport à au moins l'un desdits deuxièmes éléments de corps.

6. Appareil selon la revendication 4 ou 5, dans lequel au moins l'un desdits deuxièmes éléments de corps est monté en rotation par rapport à au moins l'un desdits premiers éléments de corps.

7. Appareil selon l'une quelconque des revendications 4 à 6, dans lequel au moins l'un desdits deuxièmes éléments de corps a une structure essentiellement identique à au moins l'un desdits premiers éléments de corps.

8. Appareil selon l'une quelconque des revendications précédentes, comprenant en outre un moyen de verrouillage (190, 192) pour maintenir l'engagement de serrage d'une pluralité desdits éléments de serrage avec ledit câble.

9. Appareil selon l'une quelconque des revendications 4 à 7 et la revendication 8, dans lequel ledit moyen de verrouillage comprend un premier moyen d'engagement (190) sur au moins l'un desdits premiers éléments de corps et un deuxième moyen d'engagement (192) sur au moins l'un desdits deuxièmes éléments de corps, où lesdits premier et deuxième moyens d'engagement sont adaptés pour être amenés en engagement par frottement l'un avec l'autre suite à l'actionnement dudit moyen d'actionnement.

10. Appareil selon la revendication 9, dans lequel au moins l'un desdits premiers éléments de corps est adapté pour se déplacer axialement par rapport à au moins l'un desdits deuxièmes éléments de corps pour amener lesdits premier et deuxième moyens d'engagement en engagement par frottement l'un avec l'autre.

11. Appareil selon l'une quelconque des revendications précédentes, comportant l'une des caractéristiques suivantes :
(i) où une pluralité desdits éléments de serrage ont une structure essentiellement identique les uns aux autres ;
(ii) où au moins l'un desdits éléments de serrage comprend au moins une saillie (76, 86) sur une surface de celui-ci adaptée pour être amenée en engagement de serrage avec le câble ; ou
(iii) où l'appareil est adapté pour établir un contact électrique avec au moins un élément électroconducteur du câble.

12. Appareil selon la revendication 11, dans lequel au moins l'une desdites surfaces incurvées a une pluralité de parties de surface (73, 75) ayant des courbures différentes et adaptées pour s'engager avec des surfaces respectives de câbles de diamètres différents.

13. Appareil selon la revendication 11, dans lequel au moins l'une desdites saillies (86) est adaptée pour pénétrer dans au moins une couche du câble.

14. Presse-étoupe comprenant :
un corps de presse-étoupe ayant une troisième ouverture à travers celui-ci pour recevoir au moins une partie d'un câble ;
au moins un joint d'étanchéité (50) pour un engagement étanche avec au moins une partie d'un câble s'étendant à travers ladite troisième ouverture ; et
au moins un appareil de serrage selon l'une quelconque des revendications précédentes.

15. Presse-étoupe selon la revendication 14, comprenant en outre au moins un premier élément de corps de presse-étoupe (6) et au moins un deuxième élément de corps de presse-étoupe (14), où au moins l'un desdits appareils de serrage est actionné par la rotation d'au moins l'un desdits premiers éléments de corps de presse-étoupe par rapport à au moins l'un desdits deuxièmes éléments de corps de presse-étoupe.
